# EUROPÄISCHE PATENTSCHRIFT

(11) **EP 2 120 672 B1**
(45) Veröffentlichungstag und Bekanntmachung des Hinweises auf die Patenterteilung: **29.02.2012**
(21) Anmeldenummer: 08716227.7
(22) Anmeldetag: 04.03.2008
(51) Int. Cl.: A47L 15/42, A47L 15/48

(54) **ENERGIEOPTIMIERTER REINIGUNGSAUTOMAT**
ENERGY-OPTIMIZED AUTOMATIC CLEANING MACHINE
APPAREIL AUTOMATIQUE DE NETTOYAGE À ÉNERGIE OPTIMISÉE

(30) Priorität: 22.03.2007 DE 102007013813
(43) Veröffentlichungstag der Anmeldung: 25.11.2009
(73) Patentinhaber: MEIKO Maschinenbau GmbH & Co. KG, 77652 Offenburg (DE)
(72) Erfinder: GAUS, Bruno, 77654 Offenburg (DE); PEUKERT, Thomas, 77704 Oberkirch (DE); KUPETZ, Joachim, 77791 Berghaupten (DE)
(74) Vertreter: Hörschler, Wolfram Johannes
(86) Internationale Anmeldenummer: PCT/EP2008/001708
(87) Internationale Veröffentlichungsnummer: WO 2008/113473

(56) Entgegenhaltungen:
- WO-A-2005/037330
- WO-A-2005/053504
- DE-A1- 1 926 049
- DE-A1- 10 022 088
- JP-A- 9 299 312
- JP-A- 11 104 055
- US-A- 5 524 358

## Beschreibung

### Stand der Technik

Die vorliegende Erfindung bezieht sich auf einen energieoptimierten Reinigungsautomaten, insbesondere einen energieoptimierten Einkammer-Spülautomaten.

Derartige Einkammer-Reinigungsautomaten werden zum Beispiel in der Gastronomie, in der Hotellerie, in Bäckereien, Krankenhäusern sowie Pflegeheimen und dergleichen eingesetzt. Der erfindungsgemäß vorgeschlagene Reinigungsautomat kann insbesondere als frontbeschickter oder Durchschub-Reinigungsautomat ausgebildet sein. Diese dienen insbesondere der Reinigung bei Gemeinschaftsverpflegung anfallender zu reinigender Geschirr-, Gläser-, Besteck-, Behälterteile etc.

Herkömmliche Reinigungsautomaten weisen üblicherweise eine Spülkammer und einen Spülwassertank auf. Eine Umwälzpumpe saugt aus dem Spülwassertank Spülwasser an und sprüht es über in der Spülkammer befestigte Wascharme, die Sprühdüsen aufweisen können, auf das verschmutzte, zu reinigende Reinigungsgut. Das versprühte Spülwasser fällt über eine Bodenauffangeinrichtung in den Spülwassertank zurück und wird erneut von der Umwälzpumpe angesaugt und auf das Reinigungsgut versprüht. Bei üblichen gewerblichen Reinigungsautomaten erfolgt nach der Reinigung des Reinigungsgutes durch das Spülwasser aus dem Spülwassertank die Nachspülung des Reinigungsgutes. Bei der Nachspülung wird das Reinigungsgut üblicherweise mit heißem Nachspülwasser beziehungsweise Frischwasser mittels eines weiteren Sprühsystems beaufschlagt, Aufgrund des Einbringens von heißem Nachspülwasser in die Spülkammer heizen sich die Kammer und das Reinigungsgut auf, wobei sich die Spülkammer mit Wrasen (Dampf) füllt. Üblicherweise wird bei gewerblichen Reinigungsautomaten das Reinigungsgut am Programmende zum Trocknen durch die Eigenwärme aus dem Reinigungsautomaten entnommen.

Wird die Spülkammer nun durch den Bediener geöffnet, strömt der heiße Wrasen aus der Spülkammer in die Umgebung des Raumes. Somit wird beim Öffnen der Tür der Spülkammer unnötig Feuchtigkeit in den Raum eingetragen, in dem der Reinigungsautomat aufgestellt ist. Ferner ist es nicht ohne weiteres möglich, dass der Bediener das Reinigungsgut aus der Spülkammer sofort entnehmen kann, ohne sich der Gefahr einer Verbrennung auszusetzen. Es ist in der Regel eine gewisse Wartezeit erforderlich, bis das aufgeheizte Reinigungsgut durch die kühlere, relativ trockene Raumluft abgekühlt und getrocknet ist.

Aus DE 10 2005 023 429 A1 ist ein Verfahren bekannt, wobei nach dem Nachspülungsschritt kühleres Wasser in die Spülkammer eingespritzt wird und das Waschgut auf diese Weise abgekühlt wird. Ferner wird durch das eingespritzte Wasser der Wrasen in der Spülkammer kondensiert. Nachteilig hierbei ist jedoch, dass das Wasser aus dem Vorratstank mit Keimen belastet sein kann und damit die Gefahr einer Rückverkeimung von nach der Reinigung keimfreiem Spülgut besteht. Ferner erschwert das Aufbringen des Wassers nach dem Nachspülschritt die selbsttätige Trocknung des aufgeheizten Reinigungsgutes.

In DE 10 2005 023 428 A1 wird eine gewerbliche Geschirrspülmaschine offenbart, bei welcher nach der Nachspülung über ein Gebläse ein Luftstrom in der Spülkammer erzeugt wird. Das Gebläse saugt über einen unterhalb einer Tür angebrachten Lufteinlass Umgebungsluft an, welche die mit Wrasen gefüllte Spülkammer durchströmt, in der sich das Spülgut befindet. Feuchte, warme Luft wird gegebenenfalls durch einen zwischengeschalteten Kondensator/Wärmetauscher über einen oberhalb der Tür befindlichen Luftauslass in die Umgebung abgeleitet. Durch die angesaugte Umgebungsluft kann das in der Kammer befindliche Spülgut getrocknet werden. Nachteilig bei dieser Vorgehensweise ist jedoch, dass der abgesaugte Wrasen in der kurzen Zeit im Wärmetauscher nur teilweise entfeuchtet werden kann und somit eine beträchtliche Restfeuchte in den Raum eingeblasen wird. Dadurch entsteht im Aufstellungsraum des Reinigungsautomaten ein schlechtes Raumklima, welches bei nicht ausreichender Raumbelüftung zu Feuchtigkeitsniederschlag, zum Beispiel an kühlen Außenwänden, führen kann und dadurch zum Beispiel der Schimmelbildung förderlich ist. Weiterhin ist es möglich, dass der im Abluftpfad des Reinigungsautomaten eingebaute Kondensator selbst verkeimt und somit Keime in den Raum eingeblasen werden. Ein weiterer Nachteil zeigt sich bei der Übertischaufstellung der Geschirrspülmaschine dahingehend, dass die von der Maschine ausgeblasene feuchte, warme Luft in Kopfhöhe dem Bedienpersonal ins Gesicht geblasen wird, was in ergonomischer Hinsicht zu extrem ungünstigen Arbeitsbedingungen führt.

DE 100 22 088 A1 zeigt eine programmgesteuerte Geschirrspülmaschine und eine Einrichtung zum Trocknen von Geschirr. Bei der aus DE 100 22 088 A1 offenbarten programmgesteuerten Geschirrspülmaschine ist eine Einrichtung zum Trocknen von Geschirr vorgesehen, wobei das Geschirr in den wasserführenden Spülgängen mit umgewälzter warmer Spülflüssigkeit im Spülbehälter aufgeheizt wird und wobei im Programmschritt "Trocknen" bei abgepumpter Spülflüssigkeit mittels eines Wärmetauschers die Feuchtigkeit im Spülbehälter und am Spülgut in einem geschlossenen Kreislauf kondensiert wird. Die Einrichtung umfasst einen während des Programmabschnittes "Trocknen" mit kaltem Frischwasser und/oder benutztem Regenerier- und Durchspülwasser der geräteeigenen Enthärtungsvorrichtung befüllbaren Vorratsbehälter, der als Wärmetauscher dient. Ferner ist ein, Prozessluft aus dem Spülbehälter zum Trocknen im geschlossenen Kreislauf führender, Luftströmungskanal mit einem Umluftgebläse vorgesehen. Der Luftströmungskanal ist an dem Vorratsbehälter außen vorbeigeführt, wobei mindestens eine Seitenwand des Vorratsbehälters als Kondensfläche bildende Kanalwand des Luftströmungskanals ausgebildet ist. Ein solcher den Trocknungsvorgang effektiv unterstützender Umluftkondenser ist konstruktiv einfach insbesondere für ein vollintegrierfähiges Gerät realisierbar, benötigt insbesondere wenig Einbauplatz im Gerätegehäuse.

Aus DE 100 2005 012 114 A1 ist eine Geschirrspülmaschine mit einer Trocknungsvorrichtung bekannt. Um den Trocknungsvorgang einer Geschirrspülmaschine zu verbessern, werden der Geschirrspülmaschine ein erster Wärmetauscher und ein zweiter Wärmetauscher zugeordnet. Dem ersten Wärmetauscher ist ein Strömungskanal mit einer Heizung und mit einem Gebläse zugeordnet, und der zweite Wärmetauscher ist an mindestens einer Seitenwand des Spülbehälters angeordnet.

DE 198 35 722 A1 bezieht sich auf einen Spülbottich für eine programmgesteuerte Geschirrspülmaschine. Der Spülbottich wird insbesondere als Edelstahlspülbottich für eine programmgesteuerte Geschirrspülmaschine mit einem Frischwasserzulauf und einem Wasserablauf ausgebildet. Die Außenwandungen sind durch eine Verkleidung abgedeckt. Zwecks Kühlung der Spülbottich-Außenwandungen ist die Verkleidung aus einem an die Außenwandungen des Spülbottichs angepassten flachen Behälter aus flexiblem Material gebildet, der mit Flüssigkeit befüllbar ist. Die Verkleidung für den Spülbottich ist insbesondere aus mehreren Behältern zusammengesetzt, wobei für jede der Außenwandungen ein Behälter vorgesehen ist und die Behälter untereinander durch eine Flüssigkeitsleitung verbunden sind und die Flüssigkeitsleitung eingangsseitig vom Frischwasserzulauf und ausgangsseitig am Wasserablauf angeschlossen ist.

DE 1 926 049 bezieht sich auf ein Verfahren zur Reinigung von Geschirr, insbesondere in Haushaltsgeschirrspülmaschinen. Geschirr wird durch Zufuhr von Wärme im Spülraum getrocknet, wobei während des Trocknens Dampf aus dem Spülraum entfernt wird. Der Dampf wird zusammen mit Luft aus dem Spülraum abgesaugt, in einem Kondensator niedergeschlagen und die von Dampf befreite Luft in den Spülraum, aus dem sie zuvor entnommen wurde, getrocknet, zurückgeführt. Der Dampf wird zusammen mit Luft in die Abflussleitung gefördert, während Frischluft in den Kühlraum geleitet wird, so dass sich ein Luftaustausch einstellt.

WO 2005/037330 bezieht sich auf ein Verfahren zur Kühlung von Reinigungsgut in Reinigungs- und Desinfektionsautomaten. Innerhalb einer Kammer erfolgt ein Abspülen des in dieser enthaltenen Reinigungsgutes, woran sich ein Vorreinigungsspülschritt anschließt. Danach wird das in der Kammer enthaltene Reinigungsgut mit einem einen Klarspülzusatz enthaltenen Wasser endgereinigt, bevor ein Desinfektionsschritt des Reinigungsgutes in der Kammer durch Einleitung von Wasserdampf in diese erfolgt. In die mit Wasserdampf gefüllte Kammer wird zwangsweise Luft bei geschlossener Tür eingebracht, wodurch ein Niederschlag von Wasserdampf innerhalb der Kammer sowie eine Abkühlung und eine Trocknung des in der Kammer enthaltenen Reinigungsgutes bewirkt wird,

JP1 1104055 bezieht sich auf eine Geschirrspül- und Trocknungsmaschine. In einer Reinigungskammer wird heißes Reinigungsfluid durch eine Zufuhrleitung eingebracht. Brauchwasser wird durch einen Ablauf an die Außenseite der Geschirrspül- und Trocknungsmaschine befördert. Die Maschine umfasst einen Ventilator um Eindringen von Außenluft während des Trocknungszyklus, wobei während des Spülschrittes erzeugter Dampf durch eine Dampfführung nach Außen geleitet wird.

### Offenbarung der Ereindung

Der vorliegenden Erfindung liegt angesichts der skizzierten Nachteile der Lösungen gemäß des Standes der Technik die Aufgabe zugrunde, einen Reinigungsautomaten bereitzustellen, welcher das Reinigungsgut trocknet und rückkühlt, wobei die Arbeitsbedingungen beziehungsweise das Raumklima für den Bediener des Reinigungsautomaten erheblich verbessert werden. Weiterhin wird durch die Ausführung des Reinigungsautomaten ein sehr effizienter und ökonomischer Einsatz von Energie erreicht. Erfindungsgemäß wird diese Aufgabe durch die Merkmale des unabhängigen Patentanspruches gelöst.

Erfindungsgemäß wird ein Reinigungsautomat vorgeschlagen, welcher eine Kammer zum Aufnehmen von Reinigungsgut aufweist. Die Kammer weist ihrerseits eine Tür auf sowie einen Ablauf mit einem Siphonbogen. Weiterhin sind Einrichtungen zum Reinigen des Reinigungsgutes mit beheiztem Spülwasser vorgesehen sowie Mittel zur thermischen Behandlung des Reinigungsgutes mittels heißem Nachspülwasser, welche über in der Spülkammer befestigte Wascharme, die eine oder mehrere Sprühdüsen aufweisen können, auf das verschmutzte Reinigungsgut aufgebracht werden. Des Weiteren sind Mittel vorgesehen, um nach der thermischen Behandlung zwangsweise Zuluft in die geschlossene Kammer des Reinigungsautomaten, bei dem es sich bevorzugt um eine Einkammer-Geschirrspülmaschine handelt, einzubringen. Schließlich weist der erfindungsgemäß vorgeschlagene Reinigungsautomat eine Abluftleitung zum Ableiten von Abluft aus der geschlossenen Kammer bei geschlossener Tür in den Ablauf auf. Das Einleiten der Abluft kann vorzugsweise insbesondere derart erfolgen, dass dabei ein als Sperre fungierendes Wasservolumen im Siphonbogen umgangen wird. Die Abluftleitung weist ein Gebläse und ein Abluftventil auf.

Bevorzugt weisen die Einrichtungen zum zwangsweisen Einbringen von Zuluft in die geschlossene Kammer des Einkammer-Reinigungsautomaten ein Gebläse auf, welches die im Reinigungsautomaten vorhandene Luft absaugt und durch trockene Zuluft aus der Umgebung in die Kammer ergänzt. Wird die Kammertür des Reinigungsautomaten dichtschließend ausgeführt, kann, alternativ oder zusätzlich, die Zuluftleitung ein Zuluftventil aufweisen, bei welchem vorzugsweise mit einem Gebläse die Luft zwangsweise in die Kammer eingebracht wird. Als Zuluft eignet sich insbesondere die Luft des Raumes, in welchem der Reinigungsautomat aufgestellt ist.

Die Keimfreiheit der Zuluft kann zusätzlich durch einen Mikrofilter verbessert werden. Das Zuluftventil wird in vorteilhafter Weise als selbsttätig schaltendes Absperrelement ausgebildet, welches entweder federgesteuert oder gewichtsgesteuert, membrangesteuert oder differenzdruckgesteuert oder als Rückschlagventil ausgebildet sein kann. Das Zuluftventil kann auch als zwangsangetriebenes Absperrelement ausgebildet sein.

Weiterhin kann, alternativ oder zusätzlich, auch das Abluftventil ein selbsttätiges Absperrelement sein. Dieses kann beispielsweise entweder federgesteuert oder gewichtsgesteuert, membrangesteuert oder differenzdruckgesteuert oder als Rückschlagventil ausgebildet sein. Alternativ kann das Abluftventil als zwangsangetriebenes Absperrelement ausgeführt werden.

Der Reinigungsautomat wird derart eingerichtet, dass ein Programm mit mindestens folgenden Verfahrensschritten durchlaufen werden kann:
- Das Reinigungsgut wird mit beheiztem Warmwasser unter Zusatz von Hilfsstoffen gereinigt,
- das Reinigungsgut wird mit erwärmtem Wasser unter Zusatz von Hilfsstoffen nachgespült und thermisch behandelt,
- das Reinigungsgut wird zwangsweise abgekühlt, indem Zuluft zwangsweise in die Kammer eingebracht wird, und Abluft, zusammen mit in der Kammer enthaltenem Wasserdampf (Wrasen), aus der Kammer in den Ablauf abgesaugt wird.

Der erfindungsgemäß vorgeschlagenen Lösung folgend, laufen innerhalb der Kammer die Programmschritte Spülen mit warmem Spülwasser und Nachspülen mit heißem Nachspülwasser in an sich bekannter Weise ab. Unter Kammer wird nachfolgend die Spülkammer eines Reinigungsautomaten verstanden, in welcher das zu reinigende Gut aufgenommen ist und dort behandelt wird. Nach der Nachspülung des Reinigungsgutes durch in die Kammer eingebrachtes Nachspülwasser wird erfindungsgemäß der Wasserdampf (Wrasen) zwangsweise aus der Kammer abgesaugt. Gleichzeitig strömt aus der Umgebung, so zum Beispiel aus dem Arbeitsraum, in welchem der Reinigungsautomat aufgestellt ist, Luft in die Kammer nach. Bezogen auf die Bedingungen in der Kammer ist die Luft, die aus dem Arbeitsraum abgezogen wird, kalt und trocken. Bei Eintrag dieser Luft in die mit Wasserdampf (Wrasen) gefüllte Kammer des Reinigungsautomaten kondensiert der Dampf in dieser, und das in der Kammer enthaltene Reinigungsgut kühlt ab. Die von außerhalb zugeführte Luft, beispielsweise Raumluft, wird zusammen mit restlichem Wasserdampf durch einen Abluftstutzen, welcher mit dem Abwassersystem des Reinigungsautomaten verbunden ist, in das bauseitige Abwassersystem abgeführt.

Um die Luftströmung innerhalb der Kammer des Reinigungsautomaten zu beeinflussen, lassen sich Absperrelemente, wie Schieber, Klappen und Ventile, in die Leitungen von und zur Kammer des Reinigungsautomaten einsetzen. Die Absperrelemente in den Leitungen von und zur Kammer können beispielsweise als Rückschlagventile ausgebildet sein. Ferner können die Absperrelemente als Klappen, Schieber oder Ventile ausgebildet sein und dazu eingesetzt werden, in Betriebspausen des Reinigungsautomaten vom Abwassersystem ausgehende Geruchsbelästigungen zurückzuhalten und somit zu vermeiden.

Wird der in die Kammer eingetragene Luftstrom nach dem Niederschlagen des Wasserdampfes in dieser weiter aufrechterhalten, lässt sich ein zusätzlicher, vorteilhafter Effekt dahingehend erzielen, dass der eingetragene Luftstrom Feuchtigkeit von der Oberfläche des Reinigungsgutes und der Kammer aufnimmt und dieses trotz geschlossener Kammertür trocknet.

Durch die erfindungsgemäß vorgeschlagene Lösung ist in vorteilhafter Weise gewährleistet, dass eine Trocknung des Reinigungsgutes innerhalb der Kammer bei geschlossener Tür abläuft und somit kein zusätzlicher Feuchtigkeitseintrag in den Arbeitsraum, in welchem der Reinigungsautomat aufgestellt ist, erfolgt. Dadurch werden die Arbeitsbedingungen für die Bediener und das sich in diesem Raum aufhaltende Personal erheblich verbessert. Durch das zwangsweise Einsaugen von Luft in die Kammer nach dem Ende der Nachspülung wird einerseits das Niederschlagen des Dampfes erreicht und andererseits die Abkühlung des in der geschlossenen Kammer enthaltenen gereinigten Reinigungsgutes beschleunigt. Dabei kann durch die erfindungsgemäß vorgeschlagene Lösung erreicht werden, dass das heiße, gereinigte Reinigungsgut auf eine Temperatur abgekühlt wird, dass es von der Bedienungsperson aus der Kammer entnommen werden kann, ohne dass sich die Bedienungsperson am Geschirr verbrennt. Zudem wird der nach der Nachspülung vorhandene Wasserdampf (Wrasen) nach dem Siphon in das Abwassersystem, welches mit dem Reinigungsautomaten verbunden ist, abgeführt.

Des Weiteren kann durch die erfindungsgemäß vorgeschlagene Lösung weitestgehend ausgeschlossen werden, dass nach dem Öffnen der Kammertür Wrasen (Dampfschwaden) in den Arbeitsbereich austreten und die Arbeitsbedingungen des den Reinigungsautomaten bedienenden Personals beeinträchtigen.

Schließlich lässt sich durch die erfindungsgemäß vorgeschlagene Lösung eine Rückverkeimung des Reinigungsgutes vermeiden. Die in die Kammer eingesogene Raumluft ist in Bezug auf das im Wassertank des Reinigungsautomaten vorhandene Wasser keimfrei, so dass die Möglichkeit einer Rückverkeimung durch im Wasser enthaltene Keime ausgeschlossen ist. Gemäß den bisherigen Lösungen zusätzlich frisches Wasser in die Kammer einzuspritzen und der damit einhergehende zusätzliche Wasserverbrauch, kann mit der erfindungsgemäß vorgeschlagenen Lösung ebenfalls entfallen, da zum Niederschlagen des Wasserdampfes (Wrasen) in der Kammer ein anderes Medium, nämlich in Bezug auf die in der Kammer herrschenden Bedingungen, trockene und kalte Umgebungsluft eingesetzt wird.

In einer weiteren vorteilhaften Ausführungsform des der Erfindung zugrunde liegenden Gedankens kann der energiesparende Reinigungsautomat mit Begrenzungswänden der Spülkammer ausgeführt werden, die doppelwandig ausgebildet sind. Durch den Hohlraum, den die doppelten Wände bilden, kann kaltes Frischwasser hindurchgeleitet werden. Dieses Wasser kühlt die die Spülkammer begrenzenden Wände, dadurch kann die Niederschlagung des Wrasens in der Kammer während, vor oder nach dem Spülvorgang erreicht werden und eine erhebliche Verminderung des Wrasenaustrittes aus der Spülkammer beim Öffnen der Spülkammertür nach dem Ende des Reinigungsprogramms erreicht werden. Das Wasser, welches durch den Hohlraum zwischen den doppelten Wänden fließt, erwärmt sich auf seinem Weg. Die doppelten Wände bilden einen Wärmetauscher, der direkt an der Kammer anliegt. Das vorgewärmte Wasser kann nun dem Boiler zugeführt werden und kann im Rahmen der Nachspülung für den nächsten Spülzyklus benutzt werden. Diese Vorgehensweise beeinflusst die Energiebilanz des erfindungsgemäß vorgeschlagenen Reinigungsautomaten weiter positiv.

Durch diese Ausführungsform der erfindungsgemäß vorgeschlagenen Lösung kann die Wärme des Wrasens zur Vorwärmung des Nachspülwassers genutzt werden und mittels des Wärmetauschers Energie aus dem Spülprozess durch die erwähnte Vorwärmung des Boilerwassers für den Nachspülzyklus in den Spülprozess zurückgekoppelt werden.

### Kurze Beschreibung der Zeichnungen

Anhand der Zeichnung wird die Erfindung nachstehend eingehender beschrieben.

Es zeigt:
- Figur 1: eine erste Ausführungsform des erfindungsgemäß vorgeschlagenen energiesparenden Reinigungsautomaten,
- Figur 2: eine weitere Ausführungsform des erfindungsgemäß vorgeschlagenen energiesparenden Reinigungsautomaten, bei dem mindestens eine Begrenzungswand der Spülkammer doppelwandig ausgebildet ist,
- Figur 3: die doppelwandig ausgebildete Kammerwand in schematischer Darstellung und
- Figur 4: eine Ausführungsvariante der in Figur 1 beschriebenen Grundform.

### Ausführungsformen

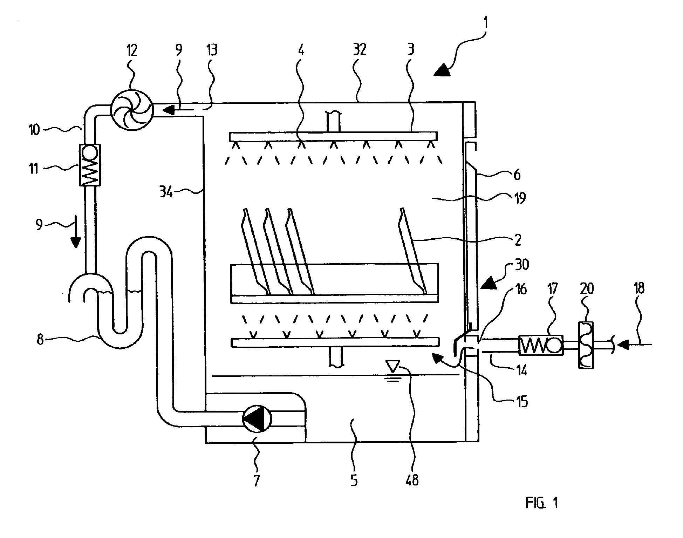

Der Darstellung gemäß Figur 1 lässt sich eine erste Ausführungsform des erfindungsgemäß vorgeschlagenen Reinigungsautomaten entnehmen.

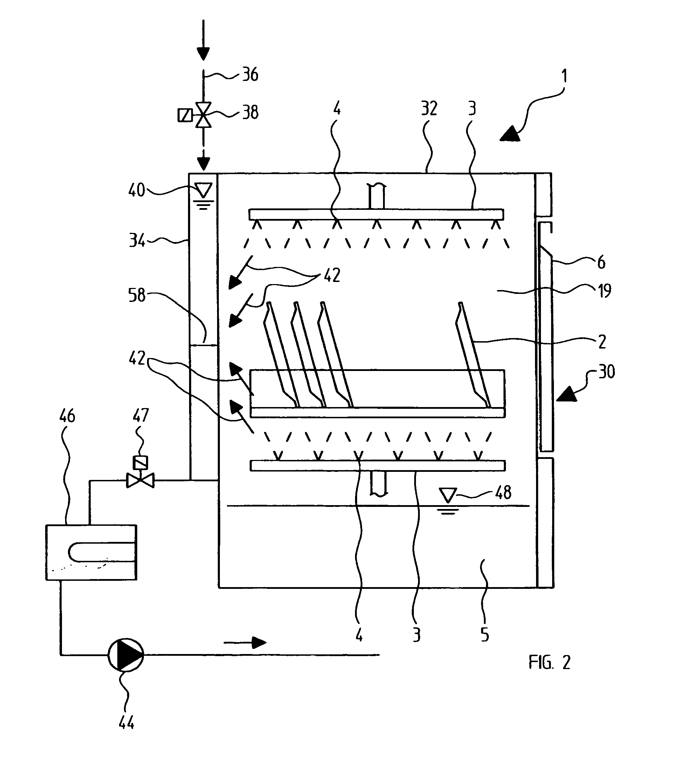

Ein Reinigungsautomat 1, bei dem es sich bevorzugt um eine Einkammer-Geschirrspülmaschine oder dergleichen handelt, umfasst eine Spülkammer 19, die über eine an einem Scharnier angelenkte Kammertür 6 zugänglich ist. Die Spülkammer 19 des Reinigungsautomaten 1 gemäß Figur 1 wird über eine Decke und Seitenwände begrenzt, die bevorzugt doppelwandig (vergleiche Darstellung gemäß Figur 2) ausgebildet sind. Im Inneren der Spülkammer 19 wird Reinigungs- oder Spülgut 2 gereinigt, welches zum Beispiel in einem oder mehreren Körben oder dergleichen aufgenommen ist. An der Decke des Reinigungsautomaten 1 befindet sich ein Wascharm 3, der eine Anzahl von Sprühdüsen 4 aufweist. Ebenso befindet sich innerhalb der Spülkammer 19, bevorzugt unterhalb des Korbes zur Aufnahme des Reinigungsgutes 2, ein weiterer Wascharm 3, der ebenfalls eine Anzahl von Sprühdüsen 4 aufweist. Über den an der Decke der Spülkammer 19 befestigten Wascharm 3 wird Reinigungsfluid auf die Oberseite des Reinigungsgutes 2 aufgebracht; durch den oberhalb eines Tanks 5 im Bodenbereich der Spülkammer 19 angeordneten Wascharm 3 wird über dessen Sprühdüsen 4 in vertikale Richtung nach oben Reinigungsfluid von unten auf das zu reinigende Gut 2 aufgebracht.

Sowohl der am Kammerdach 32 befindlicheWascharm 3 als auch der oberhalb des das Reinigungsfluid aufnehmenden Tanks angeordnete Wascharm 3 werden über eine Umwälzpumpe mit Reinigungsfluid beaufschlagt. Daneben befindet sich unterhalb des Tanks 5 im Boden des Reinigungsautomaten 1 eine Laugenpumpe 7, welche je nach Verschmutzungsgrad die im Tank 5 angesammelte Lauge einer Abwasserleitung 8 mit Siphon zuleitet.

Aus der Darstellung gemäß Figur 1 geht hervor, dass sich im rückwärtigen Bereich des Reinigungsautomaten 1 in einer Kammerwand 34 im oberen Bereich eine Abluftleitung 10 befindet, über welche an einer Abluftöffnung 13 aus der Spülkammer 19 Abluft abgezogen wird. Dazu ist in der Abluftleitung 10 ein Abluftgebläse 12 aufgenommen, über welches je nach dessen Ansteuerung die Abluft über die Abluftöffnung 13 aus der Spülkammer 19 abgesaugt wird. Vor ihrer Mündungsstelle in die Abwasserleitung in Strömungsrichtung des Abwassers gesehen hinter dem Siphon befindet sich in der Abluftleitung 10 ein als Rückschlagventil ausgebildetes Abluftventil, um Geruchsbelästigungen aus dem bauseitigen Abwassersystem zu vermeiden. Durch Bezugszeichen 9 ist die Abströmrichtung der Abluft in der Abluftleitung 10 bei eingeschaltetem Abluftgebläse 12 zu entnehmen.

Durch die in Figur 1 dargestellte Ausführungsform des erfindungsgemäß vorgeschlagenen, energiesparend betreibbaren Reinigungsautomaten 1 wird sichergestellt, dass beim Öffnen der in Figur 1 in ihrer Schließstellung 30 dargestellten Tür 6 kein Wrasenaustritt aus der Spülkammer 19 nach dem Spülvorgang erfolgt. Demzufolge wird das Raumklima im Raum, in dem der erfindungsgemäß vorgeschlagene Reinigungsautomat 1 aufgestellt wird, beim Öffnen der Tür 6 nicht mit feuchter Luft belastet. Des Weiteren kann durch die erfmdungsgemäß vorgeschlagene Lösung beim Anlaufen der Waschpumpe verhindert werden, dass Wrasen (Dampfschwaden) infolge des Druckstoßes durch eine schlagartige Erwärmung der Luft in der Spülkammer 19 und der damit verbundenen Expansion der Luft der Spülkammer 19 nach außen austritt, da der Wrasen aus der Spülkammer 19 des in Figur 1 dargestellten Reinigungsautomaten 1 abgesaugt wird. Des Weiteren kann durch die Absaugung der in der Spülkammer 19 nach dem Nachspülvorgang verbleibenden feuchten Luft der Trocknungsvorgang des Reinigungs- oder Spülgutes 2 unterstützt werden und des Weiteren das in der Spülkammer 19 gereinigte Spülgut 2 abgekühlt werden, so dass dieses ohne Verbrennungsgefahr für den Bediener nach dem Nachspülvorgang nach Ablauf einer erheblich verkürzten Zeitspanne aus der Spülkammer 19 des Reinigungsautomaten 1 in der Ausführungsform gemäß Figur 1 entnommen werden kann.

Beim Betrieb des Abluftgebläses 12 wird die in der Spülkammer 19 enthaltene feuchte Luft in die Abwasserleitung hinter dem Siphon geleitet und demzufolge eine Kontamination der Raumluft des Raumes, in dem der erfindungsgemäß vorgeschlagene Reinigungsautomat 1 aufgestellt ist, vermieden. Beim Absaugen von Abluft über die Abluftöffnung 13 aus der Spülkammer 19 bei Betrieb des Abluftgebläses 12 strömt aus Kontinuitätsgründen Raumluft über eine Zuluftöffnung 16, die sich zum Beispiel unterhalb der Tür 6 befindet, in die Spülkammer 19 nach. Die Luft passiert die Zuluftöffnung 16 in Zuströmrichtung 15, wie in Figur 1 durch den Pfeil angedeutet. Der Zuluftöffnung 16 ist ein Zuluftventil vorgeschaltet, welches zum Beispiel als ein federbelastetes Rückschlagventil ausgebildet ist, welches erst nach Einschalten des Abluftgebläses 12 und der nachfolgenden Druckabsenkung in der Spülkammer 19 gegen eine definierte Federkraft öffnet. Optional kann dem Zuluftventil 17 ein Mikrofilter 20 vorgeschaltet sein, über welchen Raumluft 18 vor Eintritt in die Spülkammer 19 nochmals gefiltert wird. Das in der Ausführungsform gemäß Figur 1 dargestellte Zuluftventil 17 kann entweder unmittelbar an der Zuluftöffnung 16 angeordnet sein, jedoch auch über eine Zuluftleitung 14 in einem Abstand von der Zuluftöffnung 16 angeordnet sein.

Durch die erfindungsgemäß vorgeschlagene Lösung - wie in Zusammenhang mit Figur 1 dargestellt - kann eine Rückverkeimung, wie sie bei Kaltwasserklarspülung auftreten würde, vermieden werden. Des Weiteren wird durch die erfindungsgemäß vorgeschlagene Lösung - wie in Zusammenhang mit der in Figur 1 dargestellten Ausführungsform dargestellt - keine warme, feuchte Luft in den Raum eingeblasen. Ferner wird vermieden, dass eine Verkeimung eines Kondensators auftritt und durch diesen Keime in den Aufstellraum des Reinigungsautomaten eingeblasen werden. Wird der Reinigungsautomat zum Beispiel in Kopfhöhe des Bedieners, so zum Beispiel auf ein Podest, aufgestellt, kann der erfindungsgemäß vorgeschlagenen Lösung folgend vermieden werden, Luft in Kopfhöhe des Bedienpersonals auszublasen, da diese am rückwärtigen Ende der Spülkammer 19, d.h. im Bereich der Kammerwand 34, durch die dort vorgesehene Abluftöffnung 16 in die Abwasserleitung hinter einem als Sperre dienenden Siphonbogen eingeleitet wird.

In der Darstellung gemäß Figur 2 ist eine weitere Ausführungsform des erfindungsgemäß vorgeschlagenen, für einen extrem energiesparenden Betrieb geeigneten Reinigungsautomaten 1 zu entnehmen.

Analog zur Ausführungsform des Reinigungsautomaten gemäß der Darstellung in Figur 1 umfasst die in Figur 2 dargestellte Ausführungsform des Reinigungsautomaten 1 einen am Kammerdach 32 aufgenommenen Wascharm 3, dessen Sprühdüsen 4 nach unten in Richtung auf das in der Spülkammer 19 aufgenommene Reinigungs oder Spülgut 2 gerichtet sind. Unterhalb des Reinigungskorbes innerhalb der Spülkammer 19, in dem das Reinigungsgut 2 aufgenommen ist, befindet sich ein weiterer Wascharm 3, dessen Sprühdüsen 4 nach oben ausgerichtet sind.

Unterhalb des Wascharmes 3 befindet sich der Tank 5, dessen Pegelstand durch Bezugszeichen 48 bezeichnet ist. Aus der Darstellung gemäß Figur 2 geht hervor, dass bei geschlossener Tür 30 die Wärme der in der abgeschlossenen Spülkammer 19 befindlichen Luft an die in dieser Ausführungsform als Doppelwand ausgebildete Kammerwand 34 übertragen wird. Wie in der Darstellung gemäß Figur 2 angedeutet, befindet sich in der als Doppelwand ausgebildeten Kammerwand 34 ein Flüssigkeitsvorrat, wie zum Beispiel Kaltwasser, welches über einen Zulauf 36 mit Zulaufventil 38 in die als Doppelwand ausgebildete Kammerwand 34 eingeleitet wird. Bezugszeichen 40 bezeichnet den Füllstand des über das Zulaufventil 38 zugelaufenen Wassers innerhalb der Kammer der doppelwandig ausgebildeten Kammerwand 34. An der Innenseite der doppelwandig ausgebildeten Kammerwand 34 erfolgt ein Wärmeübergang 42 von der in der Spülkammer 19 enthaltenen Atmosphäre an das in der doppelwandig ausgebildeten Kammerwand 34 bevorratete, zugelaufene Wasser. Das erwärmte Wasser wird in einem Boiler 46 gesammelt und kann über eine über Bezugszeichen 44 kenntlich gemachte Nachspülpumpe und ein nicht dargestelltes Nachspülsystem zum Beispiel über den unteren der Dreharme 3 wieder in die Spülkammer 19 eingetragen werden und zum Beispiel nach einer eventuell erforderlichen weiteren Aufheizung zum Klarspülen des Reinigungs- oder Spülgutes 2 verwendet werden.

Bezugszeichen 47 bezeichnet ein Ablaufventil, mit dem gegebenenfalls das Wasser im Wärmetauscher zurückgehalten werden kann, falls der Prozessablauf dies erfordert.

Bezugszeichen 58 bezeichnet den Abstand zwischen der die Spülkammer 19 begrenzenden Innenwand der als Doppelwand ausgebildeten Kammerwand 34 zu deren Außenwand. Die mit Bezugszeichen 58 bezeichnete Hohlraumtiefe liegt in der Größenordnung von einigen wenigen mm.

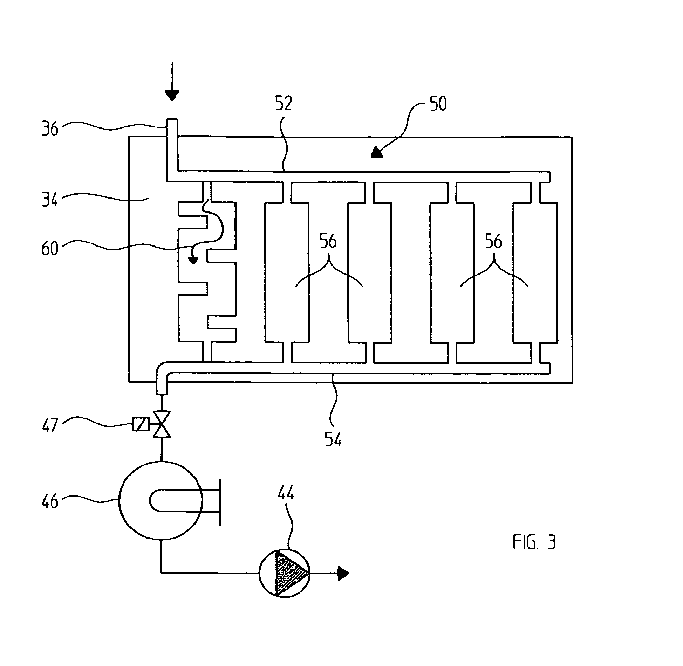

Aus der Darstellung gemäß Figur 3 geht eine Schnittansicht des Hohlraumes einer doppelwandig ausgeführten Kammerwand 34 hervor.

Aus der Ansicht gemäß Figur 3 ist entnehmbar, dass über den Zulauf 36 ein Wärmetauscherfluid, wie zum Beispiel Frischwasser, in die doppelwandig ausgebildete Kammerwand 34 gelangt. Innerhalb der doppelwandig ausgebildeten Kammerwand 34 befindet sich das Kanalysystem 50, in dem im Wesentlichen in horizontale Richtung ein Zulaufstrang 52 und parallel, jedoch in einem Abstand zu diesem, ein Ablaufstrang 54 verläuft. Zwischen dem Zulaufstrang 52 und dem ebenfalls in horizontale Richtung verlaufenden Ablaufstrang 54 verlaufen Speicherräume 56, die zum Beispiel rechteckförmig mit Zulauf und Ablauf ausgebildet sein können und hydraulisch mit dem Zulaufstrang 52 und dem Ablaufstrang 54 in Verbindung stehen. Anstelle der in Figur 3 dargestellten Speicherräume 56 zwischen dem Zulaufstrang 52 und dem Ablaufstrang 54 können auch mäanderförmig ausgebildete Speicherräume eingesetzt werden, die dem Wärmetauscherfluid eine mäandrierende Strömung - angedeutet durch Bezugszeichen 60 - aufprägen, so dass beim Abströmen des Wärmetauscherfluids vom Zulaufstrang 52 in Richtung auf den Ablaufstrang 54 ein möglichst großer Bereich der erwärmten Wandseite, die der erhitzten Spülkammer 19 zuweist, überstrichen wird und demzufolge auch ein großer Wärmetransport 42 realisiert wird.

Da sämtliche Speicherräume 56 auslassseitig mit dem Ablaufstrang 54 in Verbindung stehen, strömt das während der Passage vom Zulaufstrang 52 zum Ablaufstrang 54 durch Wärmeübertragung aus der Spülkammer 19 erwärmte Wärmetauscherfluid einem Boiler 46 zu. Stromab hinter dem Boiler 46 befindet sich die durch Bezugszeichen 44 bezeichnete Nachspülpumpe.

Das erwärmte Wasser kann, nach einer eventuell erforderlichen weiteren Aufheizung, mittels der Nachspülpumpe 44 und einem nicht dargestellten Nachspülsystem wieder in die Spülkammer 19 eingetragen werden und zum Beispiel zum Klarspülen des in dieser aufgenommenen Reinigungs- oder Spülgutes 2 verwendet werden.

Mit der erfindungsgemäß vorgeschlagenen Lösung kann die in dem Wärmetauscherfluid, welches mindestens eine doppelwandig ausgebildete Begrenzungswand der Spülkammer 19 durchströmt hat, enthaltene Energie zur Nachspülwasservorwärmung ausgenutzt werden, so dass sich die bis zur endgültigen Aufheiztemperatur erforderliche Heizenergie am Boiler 46 verringert. Dadurch ergibt sich eine erhebliche Energieeinsparung hinsichtlich der für die Erwärmung von Frischwasser im Boiler 46 aufzuwendenden Heizenergie, da mindestens ein Teil des für den nachfolgenden Nachspülzyklus benötigten Frischwassers auf die erfindungsgemäß vorgeschlagene Art und Weise vorgewärmt werden kann. Auch in dieser Ausführungsform ist dem Boiler 46 ein Ablaufventil 47 für das Wärmetauscherfluid 40 vorgeschaltet.

Des Weiteren lässt sich durch die erfindungsgemäß vorgeschlagene Lösung eine Kondensierung des Wrasens in der Spülkammer 19 während oder nach dem Nachspülvorgang realisieren und schließlich und endlich ein erheblich verringerter Wrasenaustritt aus der geöffneten Kammertür 6 beim Öffnen nach Ende des Reinigungsprogrammes erreichen.

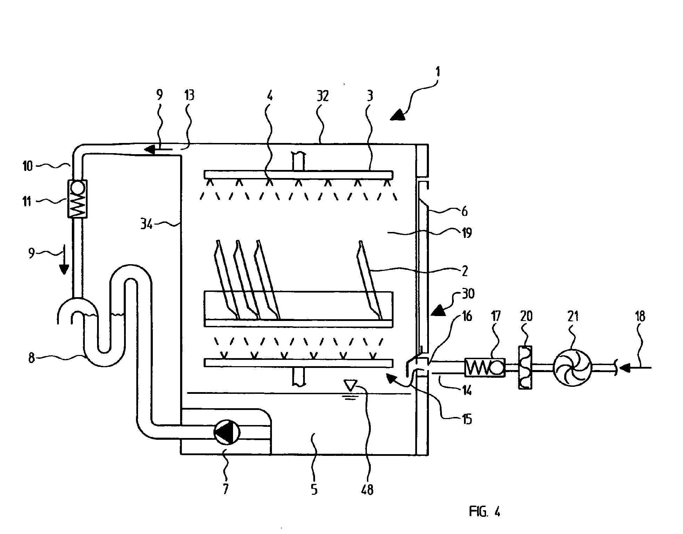

Figur 4 zeigt eine Ausführungsvariante der in Figur 1 dargestellten Ausführungsform der erfindungsgemäß vorgeschlagenen Reinigungsvarianten.

Im Gegensatz zur Ausführungsform gemäß Figur 1, bei der das Abluftgebläse 12 in die Abluftleitung 10 hinter der Abluftöffnung 13 angeordnet ist, ist in der Ausführungsform gemäß Figur 4 dem Zuluftventil 17 und dem Mikrofilter 20 vorgeschaltet ein Gebläse 21 angeordnet. Über das Gebläse 21 wird trockene und kalte Raumluft 18 durch das in der Darstellung gemäß Figur 4 federbelastete Rückschlagventil 17 in die Spülkammer 19 gefördert. Aus Kontinuitätsgründen verlässt ein entsprechendes Volumen diese über die mit Bezugszeichen 10 bezeichnete Abluftleitung, die in die Abwasserleitung 8 hinter einem einen Wassersperrvorrat enthaltenden Siphonbogen einströmt.

### Bezugszeichenliste

- 1: Reinigungsautomat
- 2: Reinigungsgut, Spülgut
- 3: Wascharm
- 4: Düse
- 5: Tank
- 6: Tür
- 7: Laugenpumpe (Abwasserpumpe)
- 8: Siphon (Abwasserleitung)
- 9: Abströmrichtung Abluft
- 10: Abluftleitung
- 11: Abluftventil
- 12: Gebläse (Abluftgebläse)
- 13: Abluftöffnung
- 14: Zuluftleitung
- 15: Zuströmrichtung Zuluft
- 16: Zuluftöffnung
- 17: Zuluftventil
- 18: Raumluft
- 19: Spülkammer/Reinigungskammer
- 20: Mikrofilter
- 21: Zuluftgebläse
- 30: geschlossene Tür
- 32: Kammerdach
- 34: Kammerwand
- 36: Zulauf
- 38: Zulaufventil
- 40: Füllstand Zulaufwasser
- 42: Wärmeaustrag aus Spülkammer 19
- 44: Nachspülpumpe
- 46: Boiler
- 47: Ablaufventil
- 48: Pegelstand Tank 5
- 50: Kanalsystem Seitenwand/Rückwand
- 52: Zulaufstrang
- 54: Ablaufstrang
- 56: Speicherraum
- 58: Hohlraumtiefe
- 60: Mäanderströmung

## Patentansprüche

1. Reinigungsautomat (1), insbesondere Geschirrspülautomat, mit einer Spülkammer (19) zur Aufnahme von Reinigungsgut (2) und mindestens einem Wascharm (3) mit einer Anzahl von Sprühdüsen (4), und mit einer Abwasserleitung (8), in welche Abwasser gepumpt wird, **dadurch gekennzeichnet, dass** Abluft aus der Spülkammer (19) in Strömungsrichtung des Abwassers gesehen, hinter einem einen Wasservorrat enthaltenden Bereich in die Abwasserleitung (8) eingeleitet wird und die Spülkammer (19) von mindestens einer, ein Wärmetauscherfluid (40) bevorratenden oder von Wärmetauscherfluid (40) durchströmten Wand (32, 34) begrenzt ist.

2. Reinigungsautomat (1) gemäß Anspruch 1, **dadurch gekennzeichnet, dass** in der Abluftleitung (10) hinter einer Abluftöffnung (13) der Spülkammer (19) ein Abluftgebläse (12) vorgesehen ist.

3. Reinigungsautomat (1) gemäß Anspruch 2, **dadurch gekennzeichnet, dass** stromab des Abluftgebläses (12) in der Abluftleitung (10) ein Abluftventil (11) vor der Mündungsstelle der Abluftleitung (10) in die Abwasserleitung (8) vorgesehen ist.

4. Reinigungsautomat (1) gemäß Anspruch 3, **dadurch gekennzeichnet, dass** das Abluftventil (11) als Rückschlagventil ausgebildet ist.

5. Reinigungsautomat (1) gemäß Anspruch 1, **dadurch gekennzeichnet, dass** in der Spülkammer (19) eine Zuluftöffnung (16) vorgesehen ist, über welche bei Unterdruck in der Spülkammer (19) Raumluft (18) nachströmt.

6. Reinigungsautomat (1) gemäß Anspruch 1, **dadurch gekennzeichnet, dass** der Zuluftöffnung (16) ein Zuluftventil (17) vorgeschaltet ist.

7. Reinigungsautomat (1) gemäß Anspruch 1, **dadurch gekennzeichnet, dass** der Zuluftöffnung (16) ein Mikrofilter (20) vorgeschaltet ist.

8. Reinigungsautomat (1) gemäß Anspruch 1, **dadurch gekennzeichnet, dass** vor der Zuluftöffnung (16) ein Zuluftgebläse (21) angeordnet ist.

9. Reinigungsautomat (1) gemäß Anspruch 1, **dadurch gekennzeichnet, dass** der mindestens einen doppelwandig ausgebildeten Kammerwand (34) ein mittels eines Zulaufventiles (38) regelbarer Zulauf (36) zugeordnet ist.

10. Reinigungsautomat (1) gemäß Anspruch 1, **dadurch gekennzeichnet, dass** in der mindestens einen doppelwandig ausgebildeten Kammerwand (34) eine Anzahl von Speicherräumen (56) zur Aufnahme von Wärmetauscherfluid (40) vorgesehen sind.

11. Reinigungsautomat (1) gemäß Anspruch 1, **dadurch gekennzeichnet, dass** in der mindestens einen doppelwandig ausgebildeten Kammerwand (34) mindestens ein Zulaufstrang (52) und mindestens ein Ablaufstrang (54) verläuft.

12. Reinigungsautomat (1) gemäß Anspruch 1, **dadurch gekennzeichnet, dass** stromab hinter dem mindestens einen Ablaufstrang (54) ein Ablaufventil (47) angeordnet ist, welches prozessabhängig angesteuert ist.

13. Reinigungsautomat (1) gemäß Anspruch 1, **dadurch gekennzeichnet, dass** stromab hinter dem mindestens einen Ablaufstrang (54) ein Boiler (46) angeordnet ist.

14. Reinigungsautomat (1) gemäß einem oder mehrerer der vorhergehenden Ansprüche, **dadurch gekennzeichnet, dass** beim Füllen der mindestens einen doppelwandig ausgebildeten Kammerwand (34) mit Wärmetauscherfluid (40), in der Spülkammer (19) enthaltener Wrasen an der Kammerwand (34) kondensiert.

## Claims

1. Cleaning machine (1), in particular a dishwashing machine, comprising a washing chamber (19) for accommodating items (2) to be cleaned and at least one wash arm (3) with a number of spray nozzles (4), and comprising a waste-water line (8) into which waste water is pumped, **characterized in that** exhaust air from the washing chamber (19) is conducted into the waste-water line (8), as seen in the direction of flow of the waste water, downstream of a region which contains a water reservoir, and the washing chamber (19) is bounded by at least one wall (32, 34) which stores a heat-exchanger fluid (40) or through which heat-exchanger fluid (40) flows.

2. Cleaning machine (1) according to Claim 1, **characterized in that** an exhaust-air fan (12) is provided in the exhaust-air line (10) downstream of an exhaust-air opening (13) of the washing chamber (19).

3. Cleaning machine (1) according to Claim 2, **characterized in that** an exhaust-air valve (11) upstream of the issuing point of the exhaust-air line (10) into the waste-water line (8) is provided downstream of the exhaust-air fan (12) in the exhaust-air line (10).

4. Cleaning machine (1) according to Claim 3, **characterized in that** the exhaust-air valve (11) is in the form of a non-return valve.

5. Cleaning machine (1) according to Claim 1, **characterized in that** a feed-air opening (16) is provided in the washing chamber (19), by means of which feed-air opening ambient air (18) subsequently flows when there is a negative pressure in the washing chamber (19).

6. Cleaning machine (1) according to Claim 1, **characterized in that** a feed-air valve (17) is connected upstream of the feed-air opening (16).

7. Cleaning machine (1) according to Claim 1, **characterized in that** a microfilter (20) is connected upstream of the feed-air opening (16).

8. Cleaning machine (1) according to Claim 1, **characterized in that** a feed-air fan (21) is arranged upstream of the feed-air opening (16).

9. Cleaning machine (1) according to Claim 1, **characterized in that** the at least one chamber wall (34), which is in the form of a double wall, has an associated inflow (36) which can be controlled by means of an inflow valve (38).

10. Cleaning machine (1) according to Claim 1, **characterized in that** a number of storage spaces (56) for accommodating heat-exchanger fluid (40) are provided in the at least one chamber wall (34) which is in the form of a double wall.

11. Cleaning machine (1) according to Claim 1, **characterized in that** at least one inflow section (52) and at least one outflow section (54) run in the at least one chamber wall (34) which is in the form of a double wall.

12. Cleaning machine (1) according to Claim 1, **characterized in that** an outflow valve (47), which is actuated in a process-dependent manner, is arranged downstream of the at least one outflow section (54).

13. Cleaning machine (1) according to Claim 1, **characterized in that** a boiler (46) is arranged downstream of the at least one outflow section (54).

14. Cleaning machine (1) according to one or more of the preceding claims, **characterized in that** water vapor which is contained in the washing chamber (19) condenses on the chamber wall (34) when the at least one chamber wall (34), which is in the form of a double wall, is filled with heat-exchanger fluid (40).

## Revendications

1. Appareil automatique de nettoyage (1), en particulier lave-vaisselle, avec une chambre de rinçage (19) destinée à recevoir les articles à nettoyer (2) et avec au moins un bras de lavage (3) portant plusieurs buses de pulvérisation (4), et avec une conduite d'eaux usées (8), dans laquelle les eaux usées sont pompées, **caractérisé en ce que**, en regardant dans le sens d'écoulement des eaux usées, on introduit l'air sortant de la chambre de rinçage (19) dans la conduite d'eaux usées (8), derrière une région contenant une réserve d'eau, et la chambre de rinçage (19) est limitée par au moins une paroi (32, 34) fournissant un fluide échangeur de chaleur (40) ou traversée par un fluide échangeur de chaleur (40).

2. Appareil automatique de nettoyage (1) selon la revendication 1, **caractérisé en ce qu'**il est prévu dans la conduite d'air d'échappement (10) une soufflante à air d'échappement (12) derrière une ouverture d'air d'échappement (13) de la chambre de rinçage (19).

3. Appareil automatique de nettoyage (1) selon la revendication 2, **caractérisé en ce qu'**il est prévu, en aval de la soufflante à air d'échappement (12) dans la conduite d'air d'échappement (10), une soupape d'air d'échappement (11) avant la sortie de la conduite d'air d'échappement (10) dans la conduite d'eaux usées (8).

4. Appareil automatique de nettoyage (1) selon la revendication 3, **caractérisé en ce que** la soupape d'air d'échappement (11) est une soupape anti-retour.

5. Appareil automatique de nettoyage (1) selon la revendication 1, **caractérisé en ce qu'**il est prévu dans la chambre de rinçage (19) une ouverture d'air d'alimentation (16), par laquelle de l'air atmosphérique (18) s'écoule en cas de dépression dans la chambre de rinçage (19).

6. Appareil automatique de nettoyage (1) selon la revendication 1, **caractérisé en ce qu'**une soupape d'air d'alimentation (17) est installée avant l'ouverture d'air d'alimentation (16).

7. Appareil automatique de nettoyage (1) selon la revendication 1, **caractérisé en ce qu'**un micro-filtre (20) est installé avant l'ouverture d'air d'alimentation (16).

8. Appareil automatique de nettoyage (1) selon la revendication 1, **caractérisé en ce qu'**une soufflante d'air d'alimentation (21) est disposée avant l'ouverture d'air d'alimentation (16).

9. Appareil automatique de nettoyage (1) selon la revendication 1, **caractérisé en ce qu'**une alimentation (36) réglable au moyen d'une soupape d'alimentation (38) est associée à ladite au moins une paroi de chambre (34) réalisée à double paroi.

10. Appareil automatique de nettoyage (1) selon la revendication 1, **caractérisé en ce qu'**il est prévu dans ladite au moins une paroi de chambre (34) réalisée à double paroi plusieurs chambres d'accumulation (56) destinées à contenir du fluide échangeur de chaleur (40).

11. Appareil automatique de nettoyage (1) selon la revendication 1, **caractérisé en ce qu'**au moins un canal d'alimentation (52) et au moins un canal d'évacuation (54) s'étendent dans ladite au moins une paroi de chambre (34) réalisée à double paroi.

12. Appareil automatique de nettoyage (1) selon la revendication 1, **caractérisé en ce qu'**une soupape d'évacuation (47), qui est commandée en fonction du processus, est disposée en aval après ledit au moins un canal d'évacuation (54).

13. Appareil automatique de nettoyage (1) selon la revendication 1, **caractérisé en ce qu'**un chauffe-eau (46) est disposé en aval après ledit au moins un canal d'évacuation (54).

14. Appareil automatique de nettoyage (1) selon une ou plusieurs des revendications précédentes, **caractérisé en ce que**, lors du remplissage de ladite au moins une paroi de chambre (34) réalisée à double paroi avec un fluide échangeur de chaleur (40), des vapeurs contenues dans la chambre de rinçage (19) se condensent sur la paroi de chambre (34).
